# EUROPÄISCHE PATENTSCHRIFT

(11) **EP 2 441 576 B1**
(45) Veröffentlichungstag und Bekanntmachung des Hinweises auf die Patenterteilung: **20.06.2012**
(21) Anmeldenummer: 10009425.9
(22) Anmeldetag: 10.09.2010
(51) Int. Cl.: B32B 3/20, B32B 3/30, B32B 17/10, F21V 33/00

(54) **Verbundglasscheibe mit integrierter LED-Matrix und Verfahren zu ihrer Herstellung**
Laminated glass panel with integrated LED matrix and method for producing same
Vitrage feuilleté doté d'une matrice à DEL intégrée et son procédé de fabrication

(43) Veröffentlichungstag der Anmeldung: 18.04.2012
(73) Patentinhaber: BGT Bischoff Glastechnik AG, 75015 Bretten (DE)
(72) Erfinder: Probst, Heiko, 74915 Waibstadt (DE)
(74) Vertreter: Durm & Partner

(56) Entgegenhaltungen:
- EP-A1- 1 947 693
- WO-A1-02/052192
- DE-A1- 10 347 163
- DE-A1-102010 005 454
- DE-B3-102004 039 883
- US-A1- 2004 031 234
- US-A1- 2009 103 298
- US-A1- 2009 268 446

## Beschreibung

Die Erfindung betrifft eine Verbundglasscheibe mit integrierter LED-Matrix, bei der zwischen zwei Glasscheiben, die durch eine klebefähige Zwischenschicht aus Kunststoff fest miteinander verbunden sind, LED-Elemente eingebettet sind. Die Erfindung betrifft ferner ein Verfahren zur Herstellung einer solchen Verbundglasscheibe mit integrierter LED-Matrix.

Selbstleuchtende Anzeigen und Videodisplays mit in Spalten und Reihen angeordneten LED-Elementen sind in vielerlei Ausführungen bekannt. Durch selektive Ansteuerung der einzelnen Leuchtdioden können die unterschiedlichsten Leuchteffekte erzielt werden, von der farbigen Beleuchtung bis hin zur Wiedergabe von bewegten Bildern.

Ein neuerer Trend ist die Integrierung von LED-Elementen in gläserne Fassadenelemente, um diese in einen riesigen Bildschirm zu verwandeln. Mittels solcher Medienfassaden können Botschaften weithin sichtbar gemacht werden.

Im einfachsten Fall wird eine LED-Matrix einfach hinter eine Glasscheibe gehängt. Damit ist die LED-Matrix zwar gegen Witterungseinflüsse geschützt, nicht aber gegen Beschädigung und Verschmutzung von der Innenseite des Gebäudes. Die LED-Matrix mitsamt der Stromversorgung und Ansteuerung erforderlichen Leitungsstrukturen können auch zwischen zwei Glasplatten eingeschlossen werden.

WO 2007/071724 A1 beschreibt eine Beleuchtungsvorrichtung, die aus mindestens einer Glasplatte und einer auflaminierten Schicht aus thermoplastischem Kunststoff besteht, wobei die Leuchtdioden in die Thermoplast-Schicht eingebettet sind.

Werden die LED-Elemente zwischen zwei Glasscheiben einer Verbundglasscheibe derart eingeschlossen, dass sie sich mit dem Laminat fest verbinden, so sind die LED-Elemente zwar bestens geschützt, können aber nicht mehr zerstörungsfrei von der Scheibe getrennt werden. Dies ist ein großer Nachteil, wenn LED-Elemente ausfallen, denn ein Austausch einzelner LED-Elemente ist nicht möglich. Kommt es zu einem Defekt, kann nur die ganze Verbundglasscheibe ausgetauscht werden, was speziell bei individuell angefertigten Fassadenelementen sehr kostspielig ist.

DE 103 47 163 A1 zeigt in Figur 12 und beschreibt Lichtleiter, die optional auch LED enthalten können, aber in jedem Fall zwischen zwei Glasscheiben so integriert sind, dass sie kaum mehr auswechselbar sind.

DE 10 2010 005454 A1 beschreibt plattenförmige Elemente mit Hohlkammern bzw. Kanälen, in denen LED-Stränge sitzen. In Figur 5 ist eine Verbundglasscheibe dargestellt, die aus zwei Glasscheiben mit Abstand und einem Distanzprofil besteht. Ein LED-Element ist im Hohlraum zwischen den Glasscheiben so eingesetzt, dass es darin allseitig eingeschlossen, also verloren ist.

Aufgabe der Erfindung ist die Schaffung einer Verbundglasscheibe mit integrierter LED-Matrix, bei der einzelne LED-Elemente ausgetauscht werden können, ohne die Glasscheiben voneinander zu trennen. Es soll darüber hinaus ein Verfahren zur Herstellung einer solchen Verbundglasscheibe mit austauschbaren LED-Elementen angegeben werden.

Die Aufgabe wird gelöst durch eine Verbundglasscheibe mit den Merkmalen des Patentanspruchs 1 sowie das im Patentanspruch 7 angegebene Herstellverfahren.

Erfindungsgemäß sind in zumindest eine der Glasscheiben Nuten eingearbeitet, vorzugsweise mit rechteckigem Querschnitt. Diese Nuten verlaufen vorzugsweise parallel zu einer Längskante. Die Nuten können durchgehend oder abgesetzt ausgebildet sein, müssen aber in jedem Fall von wenigstens einer Randseite der Glasscheibe ausgehen. Auf die Glasscheibe mit den Nuten wird eine zweite Glasscheibe mittels einer klebefähigen Zwischenschicht aus Kunststoff auflaminiert. Dadurch werden die Nuten abgedeckt, so dass sie schmale langgestreckte Kammern bilden, die zu wenigstens einer Randseite der Verbundglasscheibe hin offen sind. In diese Kammern können sodann streifenförmig ausgebildete LED-Elemente eingesetzt werden.

Damit beim Zusammenlaminieren der Glasscheiben die klebefähige Zwischenschicht nicht in die Nuten eindringt, sondern diese nach oben hin offen bleiben, werden vor dem Aufbringen der zweiten Glasscheibe temporäre Abdeckleisten in die Nuten eingesetzt. Diese Abdeckleisten können bündig mit der Oberseite der Glasscheibe abschließen oder die Nuten geringfügig überragen.

Die Abdeckleisten bestehen aus einem Material mit nicht haftfähiger Oberfläche, vorzugsweise aus Polytetrafluorethylen (PTFE). Dieser Kunststoff, der oft auch mit dem Handelsnamen TEFLON bezeichnet wird, ist sehr reaktionsträge, so dass er mit der klebefähigen Zwischenschicht chemisch nicht reagiert. Dadurch ist es möglich, nach dem Auflaminieren der zweiten Glasscheibe die temporären Abdeckstreifen durch die Öffnung in der Randseite der Verbundglasscheibe herauszuziehen und stattdessen die LED-Elemente in die so entstandenen Kammern einzuschieben.

Bei der erfindungsgemäßen Verbundglasscheibe sitzen die LED-Elemente gut geschützt zwischen zwei Glasscheiben in den durch die Nuten gebildeten Kammern, aus denen sie bei Bedarf auch wieder herausgezogen werden können. Dies hat den großen Vorteil, dass bei Ausfall eines LED-Elements dieses separat ausgewechselt werden kann, ohne dass gleich die gesamte Verbundglasscheibe ersetzt werden muss. Die elektrischen Anschlüsse für Stromversorgung und Ansteuerung der einzelnen LED-Elemente können gleichfalls durch die Öffnungen der Kammern in der Randseite der Verbundglasscheibe nach außen geführt und beispielsweise in einer Steckverbindung zusammengefasst werden.

Vorzugsweise sind die LED-Elemente als schmale Streifen ausgebildet, deren Querschnittsform an die der Nuten bzw. Kammern angepasst ist. Ein solches streifenförmiges LED-Element kann aus einem dünnen streifenförmigen Träger bestehen, auf dem eine Reihe einzelner Dioden in regelmäßigen Abständen angeordnet sind. Wird eine Anzahl solcher streifenförmiger LED-Elemente nebeneinander angeordnet, ergibt sich eine LED-Matrix mit in Reihen und Spalten angeordneten LEDs. Anzahl und Dichte der LEDs bestimmen die Auflösung des gläsernen Bildschirms sowie die Transparenz bzw. Durchsichtigkeit der Verbundglasscheibe.

Bei einer weiteren Ausführungsform der Erfindung werden vor dem Laminieren dünne Rohre in die Nuten der Glasscheibe eingelegt. Diese Rohre sind vorzugsweise als Hohlkammerprofil aus durchsichtigem oder zumindest transparentem Kunststoff hergestellt und haben flachen rechteckigen Querschnitt. Die zweckmäßig als schmale Streifen ausgebildeten LED-Elemente können einfach von der Randseite der Verbundglasscheibe her in die Rohre eingeschoben werden. Im Defektfall können sie wieder aus den Rohren herausgezogen werden.

Die Rohre werden fester Bestandteil des Laminats. Nach dem Einsetzen der LED-Elemente können die Enden der Rohre mit einem Verschlussstück reversibel verschlossen werden, so dass die Kammern, in denen die LED-Elemente sitzen, bei Bedarf jederzeit wieder zerstörungsfrei geöffnet werden können, etwa um ein defektes LED-Element auszuwechseln.

Ausführungsbeispiele der erfindungsgemäßen Verbundglasscheibe und ein Verfahren zu ihrer Herstellung werden nachstehend anhand der Abbildungen näher erläutert. Es zeigen:
- Figur 1a: eine erste Ausführungsform einer Verbundglasscheibe mit integrierter LED-Matrix, in Draufsicht;
- Figur 1b: die Verbundglasscheibe von Fig. 1a, in einem Vertikalschnitt;
- Figur 2a - 2d: die Schritte zur Herstellung der Verbundglasscheibe von Fig. 1a;
- Figur 3: eine zweite Ausführungsform einer Verbundglasscheibe mit integrierter LED-Matrix, in einem Vertikalschnitt.

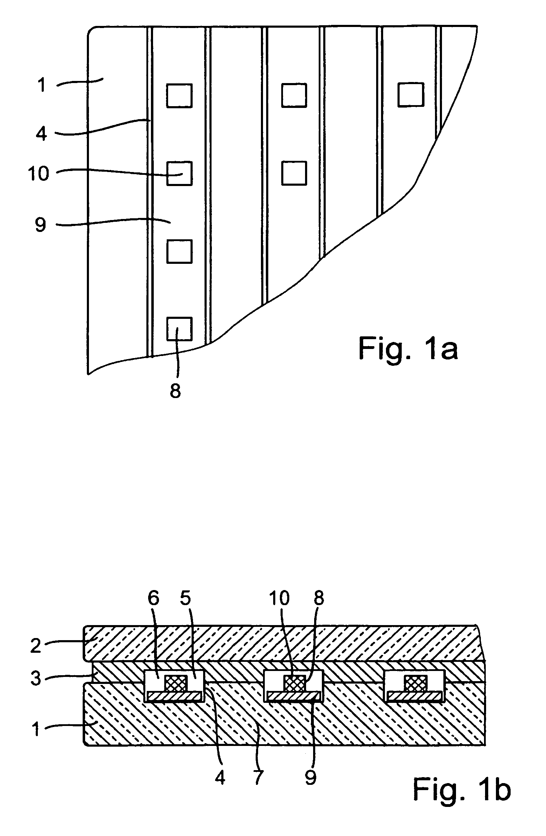

Die in den Figuren 1a und 1b schematisch dargestellte Verbundglasscheibe besteht aus einer ersten Glasscheibe 1, auf die eine zweite Glasscheibe 2 auflaminiert ist. Die beiden Glasscheiben 1 und 2 sind durch eine klebefähige Zwischenschicht 3 aus Kunststoff, beispielsweise einer zähelastischen thermoplastischen Verbundfolie, fest miteinander verbunden.

In die nach innen weisende Oberseite der ersten Glasscheibe 1 sind flache rechteckige Nuten 4 eingearbeitet, welche nach oben hin offen sind. Die auflaminierte zweite Glasscheibe 2 deckt die Nuten 4 ab, so dass schmale rechteckige Kammern 5 gebildet sind, welche sich parallel zur Ebene der Glasscheiben 1 und 2 erstrecken. Die Nuten 4 sind durchgehend, so dass die Kammern 5 stirnseitige Öffnungen 6 in der Randseite 7 der Glasscheibe 1 aufweisen.

In den Kammern 5 sitzen streifenförmige LED-Elemente 8. Diese bestehen aus einem schmalen ebenen Trägerstreifen 9 und darauf in regelmäßigen Abständen angeordneten LEDs 10. Die LED-Elemente 8 sitzen mit etwas Spiel in der Kammer 5, so dass sie aus den Öffnungen 6 in der Randseite 7 herausgezogen werden können.

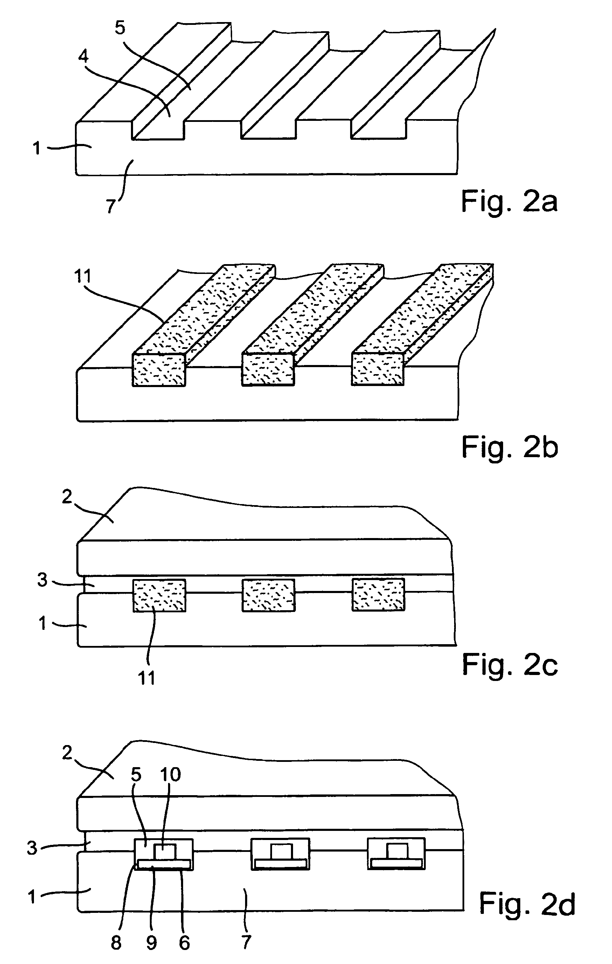

Das in den Figuren 2a bis 2d schematisch dargestellte Verfahren zur Herstellung einer Verbundglasscheibe mit integrierter LED-Matrix beginnt mit der Bereitstellung einer ersten Glasscheibe 1, die hier beispielhaft rechteckigen Grundriss hat. In die Oberseite der Glasscheibe 1 werden flache rechteckige Nuten 4 eingefräst, die an der Randseite 7 beginnen und bis zur gegenüberliegenden Randseite durchgehen.

Im nächsten Verfahrensschritt, der in Fig. 2b dargestellt ist, werden temporäre Abdeckstreifen 11 in die Nuten 5 eingesetzt. Die Abdeckstreifen 11 haben ebenfalls rechteckigen, den Nuten 4 angepassten Querschnitt, sind allerdings geringfügig höher als die Nuten 4, so dass sie aus diesen nach oben ein klein wenig herausragen. Die Abdeckstreifen 11 bestehen aus PTFE, beispielsweise aus dem unter dem Handelsnamen TEFLON bekannten Kunststoff der Firma DuPont.

Gemäß Fig. 2c wird sodann eine klebefähige Zwischenschicht 3, beispielsweise eine thermoplastische Verbundfolie oder Harz, und eine zweite Glasscheibe 2 aufgebracht. Unter Druck und Temperatur werden die beiden Glasscheiben 1 und 2 zur Verbundglasscheibe zusammengefügt. Das reaktionsträge Kunststoffmaterial und die nicht haftende Oberfläche der Abdeckstreifen 11 sorgen dafür, dass sich die Zwischenschicht 3 weder chemisch noch mechanisch mit den Abdeckstreifen 11 verbindet. Zudem verhindern die Abdeckstreifen 11, dass die thermoplastische Zwischenschicht 3 in die Nuten 4 eindringt. Nach dem Aushärten der Zwischenschicht 3 werden die Abdeckstreifen 11 durch die Öffnungen 6 in der Randseite 7 - in Fig. 2c nach vorne - herausgezogen.

Wie ein Vergleich der Figuren 2c und 2d zeigt, sind durch das Entfernen der Abdeckstreifen 11 rechteckige Kammern 5 entstanden, die durch Öffnungen 6 in der Randseite 7 zugänglich sind. In diese Kammern 5 können nun streifenförmige LED-Elemente 8 eingeschoben werden, was zum Beispiel dadurch geschehen kann, dass die streifenförmigen LED-Elemente 8 an das eine Ende der Abdeckstreifen 11 angekoppelt und dann von den Abdeckstreifen 11 in die Kammern 5 gezogen werden.

Fig. 2d zeigt die fertigen Verbundglasscheiben, bei denen die aus Trägerstreifen 9 und LEDs 10 bestehenden LED-Elemente 8 mit etwas Spiel in den Kammern 5 sitzen. Am Ende können die Kammern 5 reversibel verschlossen werden.

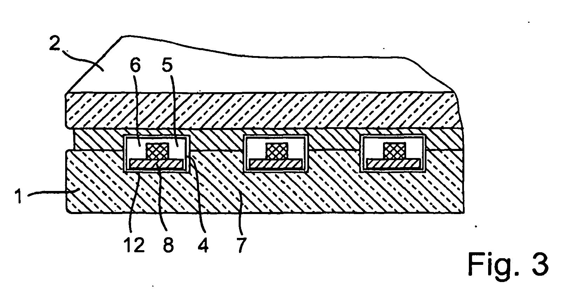

Die in Figur 3 dargestellte Verbundglasscheibe besteht wiederum aus einer ersten Glasscheibe 1, einer klebefähigen Zwischenschicht 3 aus Kunststoff und einer auflaminierten zweiten Glasscheibe 2. In die nach innen weisende Oberseite der ersten Glasscheibe 1 sind flache rechteckige Nuten 4 eingearbeitet, die nach oben hin offen sind. In diese Nuten 4 sind Rohre 12 eingesetzt, die als flache rechteckige Hohlkammerprofile ausgebildet sind und aus durchsichtigem Kunststoff bestehen. Die Rohre 12 ragen aus den Nuten 4 nach oben heraus, so dass sie von der klebefähigen Zwischenschicht 3 teilweise umschlossen sind.

Die Rohre 12 erstrecken sich parallel zur Längskante der Verbundglasscheibe und bilden Kammern 5, die zur Randseite 7 hin Öffnungen 6 aufweisen. Durch diese Öffnungen 6 sind streifenförmige LED-Elemente 8 eingeschoben.

Zweckmäßigerweise wird man den Querschnitt der Rohre möglichst flach halten, damit die Zwischenschicht 3 nicht zu dick wird. Es ist nicht notwendig, dass die Rohre 12 ringsum von der klebefähigen Zwischenschicht 3 umschlossen werden; es genügt, wenn die beiden Glasscheiben 1 und 2 in den Bereichen außerhalb der Rohre 12 durch die Zwischenschicht 3 fest verbunden sind.

### Bezugszeichen

- 1: erste Glasscheibe
- 2: zweite Glasscheibe
- 3: Zwischenschicht
- 4: Nut
- 5: Kammer
- 6: Öffnung (von 5)
- 7: Randseite
- 8: LED-Element
- 9: Trägerstreifen (von 8)
- 10: LED (von 8)
- 11: Abdeckstreifen
- 12: Rohr

## Patentansprüche

1. Verbundglasscheibe mit integrierter LED-Matrix, umfassend
zwei Glasscheiben, die durch eine klebefähige Zwischenschicht aus Kunststoff miteinander verbunden sind;
zwischen den Glasscheiben eingebettete LED-Elemente;
**dadurch gekennzeichnet, dass**
mindestens eine Glasscheibe (1) an ihrer innen liegenden Seite Nuten (4) aufweist;
die Nuten (4) zusammen mit der gegenüberliegenden Glasscheibe (2) Kammern (5) bilden, die sich parallel zur Ebene der Glasscheiben (1, 2) erstrecken und zur Randseite (7) hin offen sind;
die LED-Elemente (8) in den Kammern (5) sitzen.

2. Verbundglasscheibe nach Anspruch 1, **dadurch gekennzeichnet, dass** die Nuten (4) parallel zu einer Längskante verlaufen.

3. Verbundglasscheibe nach Anspruch 1 oder 2, **dadurch gekennzeichnet, dass** die Nuten (4) durchgehend ausgebildet sind.

4. Verbundglasscheibe nach einem der Ansprüche 1 bis 3, **dadurch gekennzeichnet, dass** die Nuten (4) rechteckigen Querschnitt haben.

5. Verbundglasscheibe nach einem der Ansprüche 1 bis 4, **dadurch gekennzeichnet, dass** die LED-Elemente (8) als schmale Streifen ausgebildet sind, welche in den Nuten (4) liegen.

6. Verbundglasscheibe nach einem der Ansprüche 1 bis 4, **dadurch gekennzeichnet, dass**
in den Nuten (4) dünne Rohre (12) aus transparentem Material angeordnet sind;
die LED-Elemente (8) als schmale Streifen ausgebildet sind, welche in die Rohre (12) eingeschoben sind.

7. Verfahren zur Herstellung einer Verbundglasscheibe mit integrierter LED-Matrix gemäß Anspruch 1, mit den folgenden Schritten:
a) Bereitstellen einer ersten Glasscheibe (1);
b) Einarbeiten von Nuten (4) in die Oberseite der ersten Glasscheibe (1), wobei die Nuten (4) zumindest von einer Randseite der Glasscheibe (1) ausgehen;
c) Abdecken der Nuten (4) durch Einsetzen von Abdeckstreifen (11) aus einem Material mit nicht haftender Oberfläche;
d) Aufbringen einer klebefähigen Zwischenschicht (3) aus Kunststoff;
e) Auflaminieren einer zweiten Glasscheibe (2), so dass sie sich mit der ersten Glasscheibe (1) in den Bereichen außerhalb der Abdeckstreifen (11) fest verbindet;
f) Herausziehen der Abdeckstreifen (11) aus den Nuten (4), wodurch zwischen den laminierten Glasscheiben (1, 2) angeordnete Kammern (5) mit Öffnungen (6) in der Randseite (7) der Verbundglasscheibe gebildet werden;
g) Einschieben von LED-Elementen (8) in die Kammern (5).

8. Verfahren nach Anspruch 7, **dadurch gekennzeichnet, dass** Abdeckstreifen (11) aus PTFE eingesetzt werden.

9. Verfahren nach Anspruch 7 oder 8, **dadurch gekennzeichnet, dass** die Nuten (4) und die Abdeckstreifen (11) korrespondierenden rechteckigen Querschnitt haben.

10. Verfahren nach einem der Ansprüche 7 bis 9, **dadurch gekennzeichnet, dass** die LED-Elemente (8) streifenförmig ausgebildet sind und mittels der Abdeckstreifen (11) in die Kammern (5) eingezogen werden.

11. Verfahren nach einem der Ansprüche 7 bis 10, **dadurch gekennzeichnet, dass** die Kammern (5) nach dem Einsetzen der LED-Elemente (8) reversibel verschlossen werden.

## Claims

1. A composite glass panel with an integrated LED matrix including two sheets of glass, which are connected together by an adhesive intermediate layer of plastic material; LED elements embedded between the sheets of glass; **characterised in that** at least one sheet of glass (1) has grooves (4) on its inner side; the grooves (4) together with the opposing sheet of glass (2) define chambers (5) which extend parallel to the plane of the sheets of glass (1, 2) and are open to the edge surface (7); the LED elements (8) are situated in the chambers (5).

2. A composite glass panel as claimed in claim 1, **characterised in that** the grooves (4) extend parallel to a longitudinal edge.

3. A composite glass panel as claimed in claim 1 or 2, **characterised in that** the grooves (4) are continuous.

4. A composite glass panel as claimed in one of claims 1 to 3, **characterised in that** the grooves (4) have a rectangular cross section.

5. A composite glass panel as claimed in one of claims 1 to 4, **characterised in that** the LED elements (8) are in the form of narrow strips, which are situated in the grooves (4).

6. A composite glass panel as claimed in one of claims 1 to 4, **characterised in that** thin tubes (12) of transparent material are arranged in the grooves (4); the LED elements (8) are in the form of narrow strips, which are inserted into the tubes (12).

7. A method of manufacturing a composite glass panel with an integrated LED matrix as claimed in claim 1 with the following steps:
a) providing a first sheet of glass (1);
b) forming grooves (4) in the surface of the first sheet of glass (1), wherein the grooves (4) start from at least one edge surface of the sheet of glass (1);
c) covering the grooves (5) by inserting masking strips (11) of a material with a non-adhesive surface;
d) applying an adhesive intermediate layer (3) of plastic material;
e) laminating on a second sheet of glass (2) so that it is connected firmly to the first sheet of glass (1) in the regions outside the masking strips (11);
f) pulling the masking strips (11) out of the grooves (4), whereby chambers (5), arranged between the laminated sheets of glass (1, 2), are formed with openings (6) in the edge surface (7) of the composite glass panel;
g) inserting LED elements (8) into the chambers (5).

8. A method as claimed in claim 7, **characterised in that** masking strips (11) of PTFE are inserted.

9. A method as claimed in claim 7 or 8, **characterised in that** the grooves (4) and the masking strips (11) have a corresponding rectangular cross section.

10. A method as claimed in one of claims 7 to 9, **characterised in that** the LED elements (8) are of strip shape and are pulled into the chambers by means of the masking strips (11).

11. A method as claimed in one of claims 7 to 10, **characterised in that** the chambers (5) are reversibly sealed after the insertion of the LED elements (8).

## Revendications

1. Vitre en verre composite avec matrice à DEL intégrée, comprenant :
- deux vitres en verre qui sont reliées entre elles par une couche intermédiaire en matière plastique capable de coller ;
- des éléments à DEL inclus entre les vitres en verre;
**caractérisée en ce que** :
- au moins une vitre en verre (1) présente des rainures (4) sur sa face située à l'intérieur ;
- les rainures (4) forment, conjointement avec la vitre en verre située vis-à-vis (2), des compartiments (5) qui s'étendent parallèlement au plan des vitres en verre (1, 2) et sont ouverts en direction de la face de bord (7) ;
- les éléments à DEL (8) sont situés dans les compartiments (5).

2. Vitre en verre composite selon la revendication 1, **caractérisée en ce que** les rainures (4) sont parallèles à un bord longitudinal.

3. Vitre en verre composite selon la revendication 1 ou 2, **caractérisée en ce que** les rainures (4) sont réalisées de manière ininterrompue.

4. Vitre en verre composite selon l'une des revendications 1 à 3, **caractérisée en ce que** les rainures (4) sont de section rectangulaire.

5. Vitre en verre composite selon l'une des revendications 1 à 4, **caractérisée en ce que** les éléments à DEL (8) se présentent sous la forme de bandes étroites qui se trouvent dans les rainures (4).

6. Vitre en verre composite selon l'une des revendications 1 à 4, **caractérisée en ce que** :
- des tubes minces (12) en matière transparente sont situés dans les rainures (4) ;
- les éléments à DEL (8) se présentent sous la forme de bandes étroites qui sont insérées dans les tubes (12).

7. Procédé de fabrication d'une vitre en verre composite avec matrice à DEL intégrée selon la revendication 1, comportant les étapes suivantes:
a) mise à disposition d'une première vitre en verre (1) ;
b) façonnage de rainures (4) dans la face supérieure de la première vitre en verre (1), les rainures (4) partant au moins d'une face de bord de la vitre en verre (1) ;
c) recouvrement des rainures (4) par mise en place de bandes de recouvrement (11) en une matière à surface non adhésive ;
d) application d'une couche intermédiaire (3) en matière plastique capable de coller ;
e) application par laminage d'une deuxième vitre en verre (2) de sorte qu'elle se solidarise avec la première vitre en verre (1) dans les zones situées en dehors des bandes de recouvrement (11) ;
f) retrait des bandes de recouvrement (11) hors des rainures (4) de sorte que se forment des compartiments (5) situés entre les vitres en verre laminées (1, 2) et présentant des ouvertures (6) dans la face de bord (7) de la vitre en verre composite ;
g) insertion d'éléments à DEL (8) dans les compartiments (5).

8. Procédé selon la revendication 7, **caractérisé en ce que** sont utilisées des bandes de recouvrement (11) en PTFE.

9. Procédé selon la revendication 7 ou 8, **caractérisé en ce que** les rainures (4) et les bandes de recouvrement (11) sont de section rectangulaire correspondante.

10. Procédé selon l'une des revendications 7 à 9, **caractérisé en ce que** les éléments à DEL (8) se présentent sous la forme de bandes et sont introduits dans les compartiments (5) au moyen des bandes de recouvrement (11).

11. Procédé selon l'une des revendications 7 à 10, **caractérisé en ce que** les compartiments (5), après la mise en place des éléments à DEL (8), sont obturés de manière réversible.
